# EUROPÄISCHE PATENTSCHRIFT

(11) **EP 3 154 827 B1**
(45) Veröffentlichungstag und Bekanntmachung des Hinweises auf die Patenterteilung: **17.04.2019**
(21) Anmeldenummer: 15706367.8
(22) Anmeldetag: 11.02.2015
(51) Int. Cl.: B60R 21/0132

(54) **VERFAHREN ZUM BETRIEB EINES SICHERHEITSSYSTEMS EINES KRAFTFAHRZEUGS BEI EINER KOLLISION UND KRAFTFAHRZEUG**
METHOD FOR OPERATING A SAFETY SYSTEM OF A MOTOR VEHICLE IN THE EVENT OF A COLLISION AND MOTOR VEHICLE
PROCÉDÉ POUR FAIRE FONCTIONNER UN SYSTÈME DE SÉCURITÉ D'UN VÉHICULE AUTOMOBILE EN CAS DE COLLISION ET VÉHICULE AUTOMOBILE

(30) Priorität: 12.06.2014 DE 102014008744
(43) Veröffentlichungstag der Anmeldung: 19.04.2017
(73) Patentinhaber: Audi AG, 85045 Ingolstadt (DE)
(72) Erfinder: GARCIA GOMEZ, Raul, 85055 Ingolstadt (DE); GEISS, Markus, 86753 Möttingen (DE)
(74) Vertreter: Thielmann, Frank
(86) Internationale Anmeldenummer: PCT/EP2015/000299
(87) Internationale Veröffentlichungsnummer: WO 2015/188900

(56) Entgegenhaltungen:
- WO-A1-00/35716
- GB-A- 2 281 798
- US-A- 5 629 847
- US-A1- 2002 013 649
- US-A1- 2007 114 769

## Beschreibung

Die Erfindung betrifft ein Verfahren zum Betrieb eines Sicherheitssystems eines Kraftfahrzeugs bei einer Kollision mit einem Kollisionsobjekt, wobei von mehreren Kollisionssensoren des Kraftfahrzeugs die Beschleunigung des Kraftfahrzeugs in unterschiedlichen in der horizontalen Ebene liegenden Richtungen beschreibende Sensordaten aufgenommen und bezüglich des Auslösens und/oder einer Anpassung eines Betriebsparameters als Aktionen von Rückhaltesystemen für Insassen des Kraftfahrzeugs ausgewertet werden. Daneben betrifft die Erfindung ein Kraftfahrzeug.

Sicherheitssysteme für Kraftfahrzeuge, die im Fall einer eingetretenen Kollision Insassenrückhaltesysteme (oft kurz RHS), beispielsweise Airbags und Gurtstraffer, ansteuern, sind im Stand der Technik bereits bekannt. Um Algorithmen, die in Reaktion auf eingehende Sensordaten den Betrieb der Rückhaltesysteme steuern, zu entwickeln, werden üblicherweise genormte Standard-Crashtests durchgeführt, wobei nach Front-, Seiten- und Heck-Kollision unterschieden wird. Entsprechend werden für die verschiedenen Seiten des Kraftfahrzeugs, für die Tests durchgeführt wurden und bei denen die Kollision auftreten könnte, Algorithmen implementiert, also konkret ein Frontkollisions-Algorithmus, ein Seitenkollisions-Algorithmus und ein HeckkollisionsAlgorithmus.

Diese auf bestimmte Kollisionsszenarien bezogenen Algorithmen, die auch als Richtungsalgorithmen bezeichnet werden können, sind dabei teilweise nicht nur in der Lage, über das Auslösen eines Rückhaltesystems zu entscheiden, sondern können auch zur Anpassung der Rückhaltewirkung an die jeweilige Kollision angepasst werden. So können sich viele Rückhaltesysteme in Aktuatoren, beispielsweise einen pyrotechnischen Gurtstraffer, eine Airbag-Zündpille und dergleichen, und Adaptivitäten, beispielsweise Gurtkraftbegrenzer, Airbag-Ventile und dergleichen, aufteilen lassen.

Problematisch bei dieser auf Richtungen fokussierten Herangehensweise ist es, dass neue Erkenntnisse aus der Verkehrsunfallforschung und daraus resultierende Simulationen zeigen, dass eine klare Differenzierung einer Richtung einer Kollision häufig nicht möglich ist, das bedeutet, es ist kaum zu entscheiden, ob es sich um eine Frontkollision, eine Seitenkollision oder eine Heckkollision handelt. Durch die bestehende starre Zuordnung von Rückhaltesystemen zu den entsprechenden Frontkollisions-, Seitenkollisions- und Heckkollisionsalgorithmen, also den Richtungsalgorithmen, ist nicht immer eine optimale Ansteuerung im Feld gegeben, wenn die tatsächlich stattfindende Kollision sich nicht einer eindeutigen Richtung zuordnen lässt.

US 2002/0013649 A1 betrifft ein Steuersystem für Insassenrückhaltemittel in einem Fahrzeug. Dabei soll die Natur eines Crashs zu einem frühestmöglichen Zeitpunkt beurteilt werden, indem das Verletzungspotential in Abhängigkeit der Insassenmasse, der Steifheit des Inneren des Fahrzeugs und der Auftreffgeschwindigkeit des Insassen bestimmt werden soll. Auch der Auftreffwinkel und die Verschiebung des Insassen kann eingehen. Zur Ermittlung des Auftreffwinkels können Sensordaten von Beschleunigungssensoren unterschiedlicher Richtung eingehen.

Der Erfindung liegt daher die Aufgabe zugrunde, eine optimalere Ansteuerung von Rückhaltesystemen in Situationen anzugeben, in denen keine eindeutige Frontkollision, Seitenkollision oder Heckkollision vorliegt.

Zur Lösung dieser Aufgabe ist bei einem Verfahren der eingangs genannten Art erfindungsgemäß vorgesehen, dass aus den Sensordaten zwei die Bewegung von wenigstens einem, insbesondere allen, Insassen des Kraftfahrzeugs entlang wenigstens einer Längsrichtung und wenigstens einer Querrichtung des Kraftfahrzeugs beschreibende Bewegungswerte, die einen zweidimensionalen Entscheidungsraum aufspannen, ermittelt werden, wobei den Aktionen zugeordnete Aktionsbereiche in dem Entscheidungsraum definiert sind und eine Aktion durchgeführt wird, wenn der durch die Bewegungswerte beschriebene Punkt im Entscheidungsraum innerhalb des der Aktion zugeordneten Aktionsraums liegt, wobei sich auf die Längsrichtung und die Querrichtung beziehende Rückhaltesysteme verwendet werden.

Ein Kraftfahrzeug weist meist mehrere Rückhaltesysteme auf, die verschiedenen Richtungen zugeordnet sind, beispielsweise Frontairbags, Seitenairbags, Gurtstraffer und dergleichen. Die vorliegende Erfindung schafft nun eine Vorgehensweise, die auch als "multidirektionaler Crash-Algorithmus" bezeichnet werden kann, mithin beliebig überlagerte Kollisionsrichtungen auswertet, basierend auf dieser Auswertung geeignete Rückhaltemittel aktiviert und gegebenenfalls optimal an die Kollision adaptiert. Es werden mithin, wie grundsätzlich bekannt, die im Kraftfahrzeug vorgesehenen Kollisionssensoren ausgewertet, um unter Verwendung geeigneter Übertragungsfunktionen die Sensordaten so zu filtern, dass sich Bewegungswerte ergeben, die beschreibend für die Bewegung der Insassen im Innenraum des Kraftfahrzeugs sind, so dass exakt auf diese Bewegung der Insassen abgestimmt die passenden Rückhaltesysteme aktiviert und gegebenenfalls auch angepasst werden können. Bezüglich der Insassen des Kraftfahrzeugs ist deren Bewegung letztlich äquivalent zur Kollisionsschwere. Die Bewegungswerte, die durch die Übertragungsfunktionen ermittelt werden, sind dabei auf die Längsachse und die Querachse des Kraftfahrzeugs bezogen, da diesen Achsen zugeordnet auch die Rückhaltesysteme ausgestaltet sind, wie aus dem Beispiel von Frontairbags und Seitenairbags deutlich wird.

Die Beschreibung der Bewegung der Insassen in Längsrichtung und Querrichtung des Kraftfahrzeugs spannt mithin einen zweidimensionalen Raum auf, konkret einen Entscheidungsraum. Die aus der Auswertung der Sensordaten ermittelten Bewegungswerte können als Punkte für jeden Zeitpunkt in dem zweidimensionalen Entscheidungsraum aufgetragen werden, in dem je nach Rückhaltemittel verschiedene Aktionsschwellen in geeigneter Weise hinterlegt sind, die die genannten Aktionsbereiche begrenzen. Die Aktionsbereiche sind dabei spezifisch für das Rückhaltesystem und für die Aktion, beispielsweise also Auslösung eines Rückhaltesystems oder Adaption eines Rückhaltesystems. Werden im Verlauf einer Kollision durch den durch die Bewegungswerte markierten Punkt (im zeitlichen Verlauf eine Linie) Aktionsschwellen überschritten, wird also festgestellt, dass sich der Punkt innerhalb eines Aktionsbereichs befindet, wird die entsprechende Aktion zur Auslösung oder Adaption von Rückhaltesystemen durchgeführt.

Auf diese Weise ist mithin ein Verfahren geschaffen, das sich an der Bewegung der Insassen, für die die Rückhaltesysteme vorgesehen sind, konkret orientiert und auch nicht eindeutig einer der vordefinierten Richtungen zugeordnete Kollisionen sinnvoll analysieren kann, so dass eine optimalere Reaktion auf Kollisionen seitens der Rückhaltemittel erreicht werden kann.

Vorteilhafterweise kann zur Ermittlung der Bewegungswerte eine zweifache Integration der die Beschleunigung in der Längsrichtung und der Querrichtung beschreibenden Sensordaten durchgeführt werden. Dabei wird der grundlegende Zusammenhang genutzt, der zwischen der Beschleunigung und dem Ort eines Objekts, hier eines Insassen, besteht. Damit geben die Bewegungswerte explizit einen Bewegungsweg der den Beschleunigungen in Längsrichtung und Querrichtung ausgesetzten Insassen wieder, beschreiben also den Bewegungsweg von zunächst frei beweglichen Massen unter Einfluss der Beschleunigungen. Dabei kann konkret vorgesehen sein, dass ein Zeitfenster für die Integration im Bereich von 10 bis 100 ms und/oder abhängig von einem aktuellen Betriebszustand wenigstens eines der Rückhaltesysteme gewählt wird. Es sind also, nachdem eine schnelle Reaktion der Rückhaltesysteme erfolgen soll, kürzere Zeitfenster zur Integration gegeben, in denen jedoch hinreichend viele Messwerte bezüglich der Beschleunigungen vorliegen können, die gegebenenfalls vor der Integration noch geglättet werden können. Dabei kann der konkrete Wert, der für das Zeitfenster der Integration zur Verfügung gestellt wird, von einem aktuellen Betriebszustand wenigstens eines der Rückhaltesysteme abhängig gewählt werden. Die Auslösung der Rückhaltesysteme sollte nämlich auf einer äußerst schnellen Zeitskala erfolgen, so dass hier kürzere Zeitfenster angesetzt werden können, beispielsweise im Bereich von 30 ms. Sind die Rückhaltesysteme jedoch erst ausgelöst und geht es beispielsweise nur noch um die mögliche Adaption von Betriebsparametern in diesen Rückhaltesystemen, beispielsweise eine Ventileinstellung und/oder eine Gurtkraftbegrenzung, ist auch eine langsamere Reaktion auf das Kollisionsgeschehen möglich, so dass hier längere Integrationszeiten, beispielsweise im Bereich von 100 ms, angesetzt werden können. Dabei sei darauf hingewiesen, dass auch allgemein eine Ausgestaltung des erfindungsgemäßen Verfahrens vorsehen kann, dass Adaptionsaktionen erst dann durchgeführt werden, wenn das zugeordnete Rückhaltesystem auch ausgelöst wurde.

Nachdem es sich bei den innerhalb des Kraftfahrzeugs befindlichen Insassen jedoch nicht um völlig frei bewegliche Massen handelt, sieht eine besonders vorteilhafte Ausgestaltung der vorliegenden Erfindung vor, dass zur Ermittlung der Bewegungswerte, insbesondere nach der Integration, wenigstens ein die Wirkung von den Bewegungsweg von Insassen ändernden und/oder beschränkenden Objekten, insbesondere eines Gurts oder eines Sitzes, beschreibender Filter und/oder Faktor verwendet wird. Gurte, Sitze und/oder andere Komponenten des Kraftfahrzeugs behindern die freie Bewegung der Insassen in dem Kraftfahrzeug und werden zweckmäßigerweise auch im Rahmen der Ermittlung der Bewegungswerte berücksichtigt, wobei bezüglich der Sitze auch die beispielsweise über Sensoren bestimmbare Sitzposition eingehen kann. Dabei kann vorgesehen sein, dass Filterparameter des Filters und/oder der Faktor aus den Ergebnissen von Simulationen und/oder Testmessungen ermittelt werden. Das bedeutet, ein wesentlicher Bestandteil der insbesondere aus der Integration und einer nachfolgenden Filterung bestehenden Übertragungsfunktionen kann die Berücksichtigung von Bewegungseinschränkungen der Insassen sein, die beispielsweise aus Kollisionsversuchen und Kollisionssimulationen abgeleitet werden können.

Dabei sei an dieser Stelle nochmals darauf hingewiesen, dass selbstverständlich auch einzelnen Insassen zugeordnete Bewegungswerte bestimmt werden können, insbesondere, wenn diese unterschiedlich in ihrer freien Bewegung behindert sind. Dann werden für die einzelnen Insassen, deren Vorhandensein beispielsweise über eine geeignete Innenraumsensorik festgestellt werden kann, selbstverständlich auch die jeweils zugeordneten Rückhaltesysteme betrachtet.

Wie bereits angedeutet wurde, sieht eine zweckmäßige Ausgestaltung der vorliegenden Erfindung vor, dass bei einer ein Auslösen eines der Rückhaltesysteme beschreibenden Aktion eine den zugeordneten Aktionsbereich begrenzende Auslöselinie verwendet wird, wobei bei einem Überschreiten der Auslöselinie durch den während der Kollision ständig nachgeführten, durch die Bewegungswerte definierten Punkt das Auslösen des Rückhaltesystems erfolgt. Die Begrenzung des Aktionsbereichs, die Auslöselinie, bietet also eine Auslöseschwelle, bei deren Überschreiten des letztlich in Echtzeit nachverfolgten Punktes, der durch die Bewegungswerte gebildet wird, unmittelbar die Aktion des Auslösens des entsprechenden Rückhaltesystems erfolgt. Dabei kann in einer einfachen Ausgestaltung eine Gerade als Auslöselinie verwendet werden, es ist jedoch auch denkbar, basierend auf weiteren Untersuchungen für den speziellen Anwendungsfall geeignetere Begrenzungen des Aktionsbereichs zum Auslösen von Rückhaltesystemen aufzufinden.

Bezüglich der Anpassung von Betriebsparametern ist es zweckmäßig, wenn bei einer eine Anpassung eines Betriebsparameters eines der Rückhaltesysteme betreffenden Aktion die Stärke der Anpassung abhängig von wenigstens einem Abstand des Punktes von einer Begrenzung des Aktionsbereichs und/oder von einer seit dem Auslösen des entsprechenden Rückhaltesystems vergangenen Zeit ermittelt wird. Derartige Anpassungen von Betriebsparametern sind insbesondere dann zweckmäßig, wenn einer Richtung mehrere Rückhaltesysteme zugeordnet sind, beispielsweise also ein Frontairbag und ein Gurtstraffer verwendet werden, die sich gegenseitig ergänzen und somit eine "weichere" Einstellung eines oder beider Rückhaltesysteme ermöglichen, was gegebenenfalls auch den Insassen zugute kommen kann. Dabei wird, wie bereits erwähnt, eine Adaptivitätssteuerung vorzugsweise dann aktiviert, wenn zuvor ein adaptives Rückhaltesystem, bei dem also Betriebsparameter anpassbar sind, ausgelöst wurde. Während verschiedene Möglichkeiten zur konkreten Anpassung des Betriebsparameters denkbar sind, ist es jedoch besonders vorteilhaft, wenn die Anpassung in Abhängigkeit der Bewegungswerte selbst erfolgt, wobei beispielsweise vorgesehen sein kann, die Geschwindigkeit der Insassen relativ zur Fahrzeugkarosserie aus den Bewegungswerten zu ermitteln, wobei eine Betrachtung für einen vorbestimmten Bewertungszeitraum durchgeführt werden kann. In diesem Fall wird also eine aus den Bewegungswerten abgeleitete Größe verwendet. Es sei darauf hingewiesen, dass dann, wenn die Bewegungswerte keinen Punkt innerhalb eines Aktionsbereiches für die Anpassung eines Betriebsparameters beschreiben, mithin keine Adaptivitätsschwelle überschritten wird, eine möglichst harte und somit sichere Einstellung der Rückhaltesysteme gewählt wird, die nur dann verändert wird, wenn die Adaptivitätsschwelle doch überschritten werden sollte.

Eine bevorzugte Weiterbildung der vorliegenden Erfindung sieht vor, dass wenigstens bei das Auslösen von Rückhaltesystemen betreffenden Aktionen parallel ein nur auf einer Richtung zugeordnete Sensordaten und Rückhaltesysteme beschränkter Richtungsalgorithmus durchgeführt wird, wobei ein Auslösesignal sowohl aufgrund der Bewegungswerte als auch aufgrund des Richtungsalgorithmus zum Auslösen des Rückhaltesystems ausreichend ist. Mithin wird vorgeschlagen, den als Kern der vorliegenden Erfindung vorgeschlagenen, "multidirektionalen" Algorithmus zusätzlich neben bereits bekannten, nur auf eine einzige Richtung bezogenen Richtungsalgorithmen zu verwenden, wie sie im Stand der Technik bereits bekannt sind. Die Auslöseentscheidung des multidirektionalen Algorithmus wird gleichberechtigt zum Richtungsalgorithmus implementiert, das bedeutet, die Entscheidung zum Auslösen eines Rückhaltesystems kann unabhängig von beiden Instanzen getroffen werden. Auf diese Weise wird die bereits vorhandene, auf Kollisionen in einer Richtung optimierte Performance der aus dem Stand der Technik bekannten Richtungsalgorithmen beibehalten und um eine spezielle Betrachtung von Kollisionen ergänzt, die nicht mehr eindeutig der Längsrichtung oder der Querrichtung zugeordnet werden können. Die Richtungsalgorithmen beziehen sich also insbesondere auf die Längsrichtung (Frontalkollisionsalgorithmus und Heckkollisionsalgorithmus) und auf die Querrichtung (Seitenkollisionsalgorithmus).

In diesem Kontext ist es besonders vorteilhaft, wenn auf die Anpassung wenigstens eines Betriebsparameters bezogene Aktionen ausschließlich aufgrund der Bewegungswerte gesteuert werden. Es hat sich gezeigt, dass diesbezüglich, wenn die Rückhaltesysteme erst ausgelöst sind, letztlich ohnehin dieselbe Verhaltensweise resultieren würde, so dass die Adaptivitätssteuerung zentral im multidirektionalen Algorithmus, der die Bewegungswerte ermittelt und auswertet, realisiert werden kann. Auf diese Weise können die Richtungsalgorithmen vereinfacht realisiert werden. Dabei kann es zweckmäßig sein, wenn zwischen dem multidirektionalen Algorithmus und den Richtungsalgorithmen ein Kommunikationskanal existiert oder die Tatsache, dass ein Rückhaltesystem ausgelöst wurde, dem multidirektionalen, die Bewegungswerte ermittelnden und auswertenden Algorithmus anderweitig zur Kenntnis gebracht werden kann, beispielsweise über das Setzen eines Flags. Wie bereits dargelegt wurde, kann als Betriebsparameter insbesondere ein die Härte des Rückhalteeingriffs des Rückhaltesystems betreffender Betriebsparameter angepasst werden. Bei Airbags kann es sich bei den Betriebsparametern beispielsweise um den Öffnungsgrad eines Airbag-Ventils handeln, bei Gurtstraffern beispielsweise um eine Gurtkraftbegrenzung.

Rückhaltesysteme beziehen sich, wie bereits dargelegt wurde und was letztlich die Grundlage der angesprochenen Richtungsalgorithmen ist, meist ohnehin auf die Längsrichtung und die Querrichtung des Kraftfahrzeugs, wie am Beispiel von Frontairbags, Kopfairbags, Seitenairbags, Gurtstraffern und dergleichen leicht ersichtlich ist. Entsprechend ist es auch im Rahmen der vorliegenden Erfindung vorgesehen, dass sich auf die Längsrichtung und die Querrichtung beziehende Rückhaltesysteme verwendet werden, das bedeutet, die Rückhaltesysteme entfalten ihre Wirkung zumindest im Wesentlichen in der Längsrichtung oder der Querrichtung.

Neben dem Verfahren betrifft die Erfindung auch ein Kraftfahrzeug, aufweisend ein Sicherheitssystem mit einem zur Durchführung des erfindungsgemäßen Verfahrens ausgebildeten Steuergeräts. Sämtliche Ausführungen bezüglich des erfindungsgemäßen Verfahrens lassen sich analog auf das erfindungsgemäße Kraftfahrzeug übertragen, mit welchen mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: die algorithmische Struktur beim Betrieb eines Sicherheitssystems in einem Ausführungsbeispiel der Erfindung,
- Fig. 2: einen Ablaufplan eines Ausführungsbeispiels des erfindungsgemäßen Verfahrens,
- Fig. 3: Kollisionsverläufe im Entscheidungsraum zur Erläuterung der Auslösung von Rückhaltesystemen,
- Fig. 4: Kollisionsverläufe im Entscheidungsraum zur Erläuterung der Adaptivität von Rückhaltesystemen, und
- Fig. 5: ein erfindungsgemäßes Kraftfahrzeug.

Im Folgenden soll nun ein Ausführungsbeispiel des erfindungsgemäßen Verfahrens genauer erläutert werden, das zum Betrieb eines Sicherheitssystems genutzt wird, konkret zur Steuerung des Betriebs von Rückhaltesystemen bei einer aufgetretenen Kollision. Kollisionen werden in modernen Kraftfahrzeugen meist durch Kollisionssensoren detektiert, die die Beschleunigung des Kraftfahrzeugs in einem bestimmten Bereich in Längs- und Querrichtung vermessen, wobei häufig zwischen Frontkollisionssensoren, Heckkollisionssensoren und Seitenkollisionssensoren unterschieden wird. Als Rückhaltesysteme weist das hier konkret diskutierte Kraftfahrzeug Frontairbags, Seitenairbags und Gurtstraffer für alle Insassen auf. Selbstverständlich können auch weitere Rückhaltesysteme vorgesehen sein.

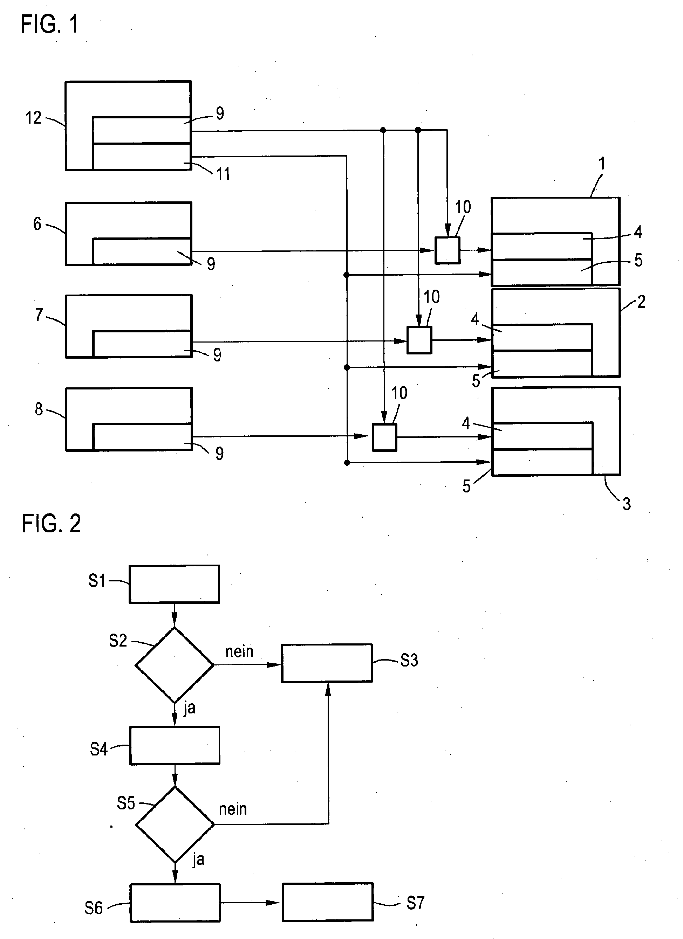

Dabei wird, wie sich aus der Prinzipskizze der Fig. 1 ergibt, in diesem Beispiel nicht nur ein einziger Algorithmus zum Steuern der Rückhaltesysteme 1, 2, 3 verwendet, wobei die Rückhaltesysteme 1, 2, 3 vorliegend in Rückhaltesysteme 1 für den Frontaufprall, Rückhaltesysteme 2 für den Seitenaufprall und Rückhaltesysteme 3 für den Heckaufprall unterteilt sind. Die Unterkästchen 4, 5 symbolisieren dabei das Auslösen der Rückhaltesysteme 1, 2, 3 respektive die Adaption von Betriebsparametern der Rückhaltesysteme 1, 2, 3. Es sei darauf hingewiesen, dass selbstverständlich zumindest bei Hecckollisionen und Frontkollisionen wenigstens teilweise gleiche Rückhaltesysteme grundsätzlich verwendet werden können; häufig werden Rückhaltesysteme, die einer Kollisionsart zugeordnet sind, auch gleichzeitig ausgelöst, beispielsweise bei einer Frontkollision zeitgleich der Gurtstraffer und der Frontairbag.

Jede dieser Kollisionsrichtungen beziehungsweise Kollisionsarten, also Frontkollision, Seitenkollision und Heckkollision, ist nun zunächst jedenfalls ein Richtungsalgorithmus 6, 7, 8 zugeordnet, hier konkret ein Frontkollisionsalgorithmus 6, ein Seitenkollisionsalgorithmus 7 und ein Heckkollisionsalgorithmus 8. Derartige für bestimmte Richtungen der Kollision entwickelte Richtungsalgorithmen 6, 7, 8 sind im Stand der Technik bereits grundsätzlich bekannt, werden aber vorliegend, wie durch das Unterkästchen 9 symbolisiert ist, lediglich bezüglich der Auslöseentscheidung genutzt.

Denn parallel zu den Richtungsalgorithmen 6, 7, 8 (beziehungsweise einem nach bestimmten Kriterien durch Auswertung der Sensordaten der Kollisionssensoren ausgewählten Richtungsalgorithmus 6, 7, 8) läuft auch ein multidirektionaler Algorithmus 12 im Steuergerät des Sicherheitssystems ab. Auch dieser kann gleichberechtigt mit den Richtungsalgorithmen 6, 7, 8, wie durch die oder-Verknüpfungen 10 symbolisiert ist, eine Auslösung der Rückhaltesysteme 1, 2, 3 veranlassen; er übernimmt jedoch im vorliegenden Ausführungsbeispiel auch vollständig die Adaptivitätssteuerung, wie durch das Unterkästchen 11 symbolisiert ist. Das bedeutet, die Anpassung von Betriebsparametern der Rückhaltesysteme 1, 2, 3 wird nach deren Auslösung zentral durch den multidirektionalen Algorithmus 12 gesteuert.

Fig. 2 zeigt etwas genauer die skizzierte Ablaufstruktur des Ausführungsbeispiels des erfindungsgemäßen Verfahrens. Dabei wird in einem Schritt S1 eine Kollision detektiert. Dies führt dazu, dass in einem Schritt S2 wenigstens durch den multidirektionalen Algorithmus 12, bei Erfüllung entsprechender Kriterien jedoch auch durch wenigstens einen der Richtungsalgorithmen 6, 7, 8, überprüft wird, ob ein Rückhaltesystem ausgelöst werden soll.

Hierzu wird seitens des multidirektionalen Algorithmus 12 eine Auswertung der Sensordaten der Kollisionssensoren (idealerweise aller Kollisionssensoren) vorgenommen, um die Bewegung der Insassen beschreibende Bewegungswerte zu ermitteln. Damit dies gelingen kann, wird eine Übertragungsfunktion eingesetzt, die eine zweifache Integration der die Beschleunigung in Längs- und Querrichtung beschreibenden Sensordaten sowie eine Filterung im Hinblick auf Einschränkungen der Insassenbewegung, beispielsweise durch den Gurt und die Sitze, umfasst. Jeweilig benötigte Parameter der Übertragungsfunktion insgesamt können dabei in Simulationen und/oder Testmessungen ermittelt werden. Ergebnis sind zwei Bewegungswerte, nämlich einer, der sich auf die Längsrichtung des Kraftfahrzeugs (x) und einen, der sich auf die Querrichtung des Kraftfahrzeugs (y) bezieht. Die aktuellen Bewegungswerte definieren also einen Punkt in einem zweidimensionalen Entscheidungsraum, wobei im Schritt S2 überprüft wird, ob diese Punkte innerhalb von im Entscheidungsraum definierten Aktionsbereichen liegen, mithin im zeitlichen Verlauf eine die Begrenzung der Aktionsbereiche bildende Auslöseschwelle überschritten wird.

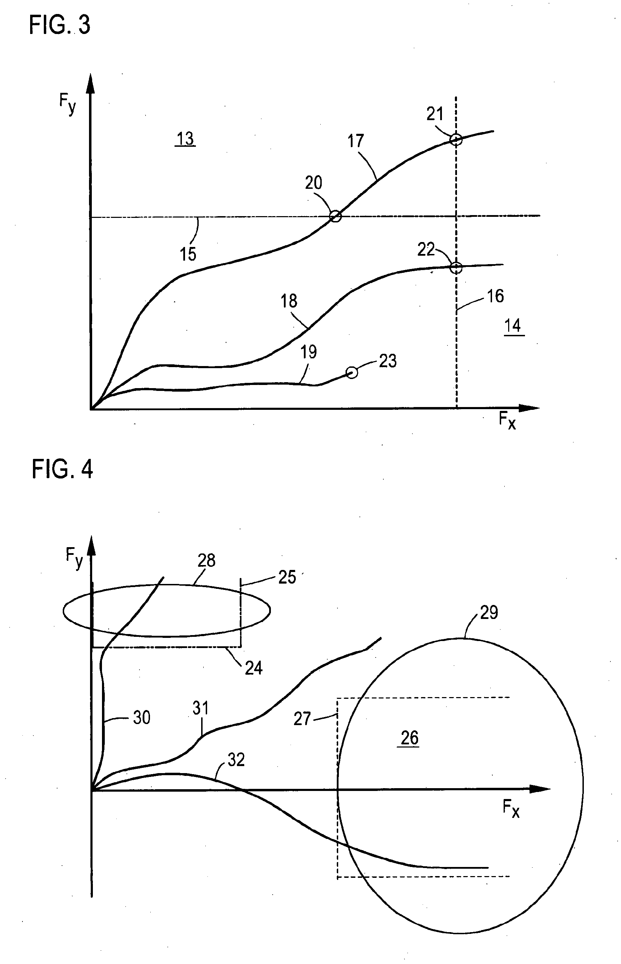

Dies sei anhand der Graphik der Figur 3 näher erläutert, die den durch die möglichen Werte für die Bewegungswerte aufgespannten Entscheidungsraum (Achsen Fₓ und F_{y}) zeigt. Dort sind zwei Begrenzungen von Aktionsbereichen 13, 14 als Auslöseschwellen gezeigt, die vorliegend als Auslöselinien 15, 16 bezeichnet werden sollen. Die Auslöselinie 15, 16 sind im vorliegenden, vereinfachten Ausführungsbeispiel als Geraden dargestellt, müssen jedoch nicht zwangsläufig gerade verlaufen.

Ferner zeigt Fig. 3 drei mögliche Kollisionsverläufe 17, 18, 19, die durch die zeitliche Abfolge der durch die Bewegungswerte definierten Punkte entstehen, gezeigt. Eine erste Kollision 17 ist offensichtlich recht stark und führt schnell zu ausgedehnten Bewegungen der Insassen. In einem Punkt 20 wird zunächst die Auslöselinie 15 überschritten, so dass der Kollisionsverlauf 17 innerhalb des Aktionsbereichs 13 weiterverläuft, der der Auslösung des Seitenairbags zugeordnet ist. Zu dem Zeitpunkt, zu dem der Kollisionsverlauf 17 den Punkt 20 erreicht, erfolgt mithin die automatische Auslösung des Seitenairbags. Im weiteren Verlauf des Crash wird jedoch auch die Auslöselinie 16 überschritten, Punkt 21, so dass der Kollisionsverlauf auch im Aktionsbereich 14 liegt, mithin zu dem entsprechenden Zeitpunkt auch der Frontairbag ausgelöst wird. Der Kollisionsverlauf 17 entspricht daher deutlich einer Kollision, die nicht eindeutig der Längsrichtung oder der Querrichtung des Kraftfahrzeugs zugeordnet werden kann.

Der Crashverlauf 18 verläuft in Querrichtung des Kraftfahrzeugs ersichtlich weniger stark und kreuzt im Punkt 22 lediglich die Auslöselinie 16 zum Aktionsbereich 14, so dass der Frontairbag (und gegebenenfalls zusätzlich der Gurtstraffer) ausgelöst wird. Es sei darauf hingewiesen, dass selbstverständlich auch unterschiedliche Auslöseschwellen beziehungsweise Aktionsbereiche für den Frontairbag und den Gurtstraffer vorgesehen sein können.

Der dritte Kollisionsverlauf 19 beschreibt einen weniger starken Kollisionsunfall, der zum Punkt 23 als beendet angesehen wird, ohne dass eine Auslöseschwelle 15, 16 erreicht wird.

Zurückkehrend zu Fig. 2 bedeutet dies, dass dann, wenn in Schritt S2 nach erkannter Beendigung der Kollision kein Rückhaltesystem 1, 2, 3 ausgelöst wurde, gemäß dem Schritt S3 die verwendeten Algorithmen zurückgesetzt werden, bis eine weitere Kollision auftritt. Sind jedoch Rückhaltesysteme 1, 2, 3 ausgelöst worden, wird im Schritt S4 fortgefahren und die Adaptivitätssteuerung wird aktiviert. Dabei wird im Schritt S5, vorliegend wie dargelegt, nur noch durch den multidirektionalen Algorithmus 12, anhand der Bewegungswerte überwacht, ob im Entscheidungsraum Aktionsbereiche erreicht werden, die für eine Adaption von Betriebsparametern wenigstens eines Rückhaltesystems 1, 2, 3 stehen. Mit anderen Worten werden die Bewegungswerte, die bereits im Schritt S2 nachverfolgt wurden, auch im Schritt S5 weiter nachverfolgt, was durch Fig. 4 näher erläutert werden soll, die wiederum den Entscheidungsraum mit den Achsen Fₓ und F_{y} zeigt. Ein der Anpassung von Betriebsparametern des Seitenairbags zugeordneter Aktionsbereich 24 wird durch die Adaptionsschwelle 25 begrenzt, ein einer Anpassung von Betriebsparametern des Gurtstraffers zugeordneter Aktionsbereich 26 wird durch eine Adaptivitätsschwelle 27 begrenzt. Die Ellipsen 28 und 29 symbolisieren die Einflussbereiche des Seitenairbags respektive des Frontairbags.

Erneut sind zudem drei Kollisionsverläufe 30, 31 und 32 gezeigt, wobei der Kollisionsverlauf 30 in den Aktionsbereich 24 zur Anpassung eines Betriebsparameters des Seitenairbags eindringt, der Kollisionsverlauf 32 in den Aktionsbereich 26 zur Anpassung eines Betriebsparameters des Gurtstraffers. Der Crashverlauf 31 berührt keinen dieser Aktionsbereiche, so dass hier die maximal harte Rückhaltewirkung des Seitenairbags und des Gurtstraffers beibehalten wird.

Wird, wie im Fall des Kollisionsverlaufs 31, keine Adaptionsschwelle 20, 27 überschritten, und ist die Kollision zu einem späteren Zeitpunkt beendet, wird vom Schritt S5 wieder mit dem Schritt S3 fortgefahren. Ist jedoch eine Anpassung eines Betriebsparameters erforderlich, wird die Art der Ansteuerung im Schritt S6 ermittelt. Unter Verwendung der Bewegungswerte wird dabei auf Basis geeigneter Bewertungszeiträume die Geschwindigkeit der Insassenbewegung relativ zur Fahrzeugkarosserie ermittelt, woraus sich entsprechend angepasste Betriebsparameter ergeben. Ist dieser Bewertungszeitraum abgeschlossen und liegen die Betriebsparameter vor, erfolgt in einem Schritt S7 die tatsächliche Ansteuerung der entsprechenden Rückhaltesysteme 1, 2, 3 mit dem neuen Betriebsparameter, insbesondere also eine Weichschaltung wenigstens eines Rückhaltesystems 1, 2, 3.

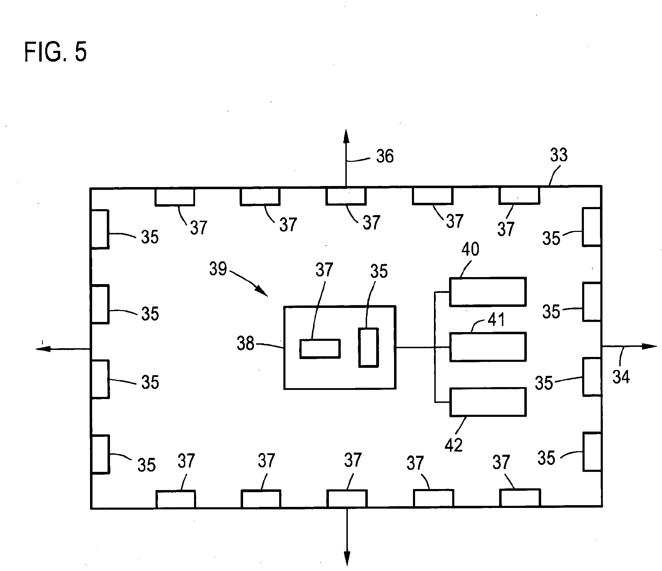

Fig. 5 zeigt schließlich eine Prinzipskizze eines erfindungsgemäßen Kraftfahrzeugs 33. Dieses weist an seiner Front und an seinem Heck der Fahrzeuglängsrichtung 34 zugeordnete Kollisionssensoren 35 auf, die insbesondere die Beschleunigung in Fahrzeuglängsrichtung messen, sowie an beiden Seiten der Querrichtung 36 zugeordnete Kollisionssensoren 37, die insbesondere die Beschleunigung in Querrichtung 36 aufnehmen. Die Sensordaten der Kollisionssensoren 35, 37 werden in einem Steuergerät 38 eines Sicherheitssystems 39 des Kraftfahrzeugs 33 ausgewertet, welches zur Durchführung des erfindungsgemäßen Verfahrens ausgebildet ist und mithin nicht nur mit den Kollisionssensoren 35, 37 verbunden ist, sondern auch mit diversen Rückhaltesystemen 1, 2, 3, hier einem Frontairbag 40, einem Seitenairbag 41 und einem Gurtstraffer 42 jeweils für die verschiedenen Insassen. Selbstverständlich können auch innerhalb des Steuergeräts 38 selber Kollisionssensoren 35, 37 für die Längsrichtung 34 und die Querrichtung 36 vorgesehen sein, deren Sensordaten berücksichtigt werden.

## Patentansprüche

1. Verfahren zum Betrieb eines Sicherheitssystems (39) eines Kraftfahrzeugs (33) bei einer Kollision mit einem Kollisionsobjekt, wobei von mehreren Kollisionssensoren (35, 37) des Kraftfahrzeugs (33) die Beschleunigung des Kraftfahrzeugs (33) in unterschiedlichen in der horizontalen Ebene liegenden Richtungen (34, 36) beschreibende Sensordaten aufgenommen und bezüglich des Auslösens und/oder einer Anpassung eines Betriebsparameters als Aktionen von Rückhaltesystemen (1, 2, 3) für Insassen des Kraftfahrzeugs (33) ausgewertet werden, wobei sich auf die Längsrichtung und die Querrichtung beziehende Rückhaltesysteme (1, 2, 3) verwendet werden, wobei aus den Sensordaten zwei die Bewegung von wenigstens einem Insassen des Kraftfahrzeugs (33) entlang wenigstens einer Längsrichtung (34) und wenigstens einer Querrichtung (36) des Kraftfahrzeugs (33) beschreibende Bewegungswerte, die einen zweidimensionalen Entscheidungsraum aufspannen, ermittelt werden, wobei den Aktionen zugeordnete Aktionsbereiche (13, 14, 24, 26) in dem Entscheidungsraum definiert sind und eine Aktion durchgeführt wird, wenn der durch die Bewegungswerte beschriebene und während der Kollision ständig nachgeführte Punkt im Entscheidungsraum innerhalb des der Aktion zugeordneten Aktionsbereichs (13, 14, 24, 26) liegt.

2. Verfahren nach Anspruch 1,
**dadurch gekennzeichnet,**
**dass** zur Ermittlung der Bewegungswerte eine zweifache Integration der die Beschleunigung in der Längsrichtung (34) und der Querrichtung (36) beschreibenden Sensordaten durchgeführt wird.

3. Verfahren nach Anspruch 2,
**dadurch gekennzeichnet,**
**dass** ein Zeitfenster für die Integration im Bereich von 10 bis 100 ms und/oder abhängig von einem aktuellen Betriebszustand wenigstens eines der Rückhaltesysteme (1, 2, 3) gewählt wird.

4. Verfahren nach einem der vorangehenden Ansprüche,
**dadurch gekennzeichnet,**
**dass** zur Ermittlung der Bewegungswerte wenigstens ein die Wirkung von den Bewegungsweg von Insassen ändernden und/oder beschränkenden Objekten und/oder deren Position beschreibender Filter und/oder Faktor verwendet wird.

5. Verfahren nach Anspruch 4,
**dadurch gekennzeichnet,**
**dass** Filterparameter des Filters und/oder der Faktor aus den Ergebnissen von Simulationen und/oder Testmessungen ermittelt werden.

6. Verfahren nach einem der vorangehenden Ansprüche,
**dadurch gekennzeichnet,**
**dass** bei einer ein Auslösen eines der Rückhaltesysteme (1, 2, 3) beschreibenden Aktion eine den zugeordneten Aktionsbereich (13, 14) begrenzende Auslöselinie (15, 16) verwendet wird, wobei bei einem Überschreiten der Auslöselinie (15, 16) durch den während der Kollision ständig nachgeführten, durch die Bewegungswerte definierten Punkt das Auslösen des Rückhaltesystems (1, 2, 3) erfolgt.

7. Verfahren nach einem der vorangehenden Ansprüche,
**dadurch gekennzeichnet,**
**dass** bei einer eine Anpassung eines Betriebsparameters eines der Rückhaltesysteme (1, 2, 3) betreffenden Aktion die Stärke der Anpassung abhängig von wenigstens einem Abstand des Punktes von einer Begrenzung des Aktionsbereichs (24, 26) und/oder von einer seit dem Auslösen des entsprechenden Rückhaltesystems (1, 2, 3) vergangenen Zeit und/oder von den Bewegungswerten ermittelt wird.

8. Verfahren nach einem der vorangehenden Ansprüche,
**dadurch gekennzeichnet,**
**dass** wenigstens bei das Auslösen von Rückhaltesystemen (1, 2, 3) betreffenden Aktionen parallel ein nur auf einer Richtung zugeordnete Sensordaten und Rückhaltesysteme (1, 2, 3) beschränkter Richtungsalgorithmus (6, 7, 8) durchgeführt wird, wobei ein Auslösesignal sowohl aufgrund der Bewegungswerte als auch aufgrund des Richtungsalgorithmus (6, 7, 8) zum Auslösen des Rückhaltesystems (1, 2, 3) ausreichend ist.

9. Verfahren nach Anspruch 8,
**dadurch gekennzeichnet,**
**dass** auf die Anpassung wenigstens eines Betriebsparameters bezogene Aktionen ausschließlich aufgrund der Bewegungswerte gesteuert werden.

10. Verfahren nach einem der vorangehenden Ansprüche,
**dadurch gekennzeichnet,**
**dass** als Betriebsparameter ein die Härte des Rückhalteeingriffs des Rückhaltesystems (1, 2, 3) betreffender Betriebsparameter angepasst wird.

11. Kraftfahrzeug (33), aufweisend ein Sicherheitssystem (39) mit einem zur Durchführung eines Verfahrens nach einem der vorangehenden Ansprüche ausgebildeten Steuergerät (38).

## Claims

1. Method for operating a safety system (39) of a motor vehicle (33) in the event of a collision with a collision object, wherein sensor data from several collision sensors (35, 37) of the motor vehicle (33) describing the acceleration of the motor vehicle (33) in different directions (34, 36) lying in the horizontal plane are recorded, and with respect to the triggering and/or an adaptation of an operating parameter are evaluated as actions of restraining systems (1, 2, 3) for passengers of the motor vehicle (33), wherein restraining systems (1, 2, 3) relating to the longitudinal direction and the transverse direction are used, wherein from the sensor data two motion values, describing the movement of at least one passenger of the motor vehicle (33) along at least one longitudinal direction (34) and at least one transverse direction (36) of the motor vehicle (33), which subtend a two-dimensional decision space are determined, wherein action regions (13, 14, 24, 26) assigned to the actions are defined in the decision space and an action is carried out when the point in the decision space described by the motion values and constantly tracked during the collision lies within the action region (13, 14, 24, 26) assigned to the action.

2. Method according to claim 1,
**characterised in**
**that** for determining the motion values, a double integration of the sensor data describing the acceleration in the longitudinal direction (34) and the transverse direction (36) is carried out.

3. Method according to claim 2,
**characterised in**
**that** a time window is selected for the integration in the range of 10 to 100 ms and/or depending on an actual operating state of at least one of the restraining systems (1, 2, 3).

4. Method according to any of the preceding claims,
**characterised in**
**that** for determining the motion values at least one filter and/or factor is used which describes the effect of objects changing and/or limiting the motion path of passengers and/or the position of said objects.

5. Method according to claim 4,
**characterised in**
**that** filter parameters of the filter and/or the factor are detected from the results of simulations and/or test measurements.

6. Method according to any of the preceding claims,
**characterised in**
**that** in the event of an action describing a triggering of one of the restraining systems (1, 2, 3) a trigger line (15, 16) delimiting the assigned action region (13, 14) is used, wherein when the trigger line (15, 16) is exceeded by the point constantly tracked during the collision and defined by the motion values, the triggering of the restraining system (1, 2, 3) results.

7. Method according to any of the preceding claims,
**characterised in**
**that** in the event of an action concerning an adjustment of an operating parameter of one of the restraining systems (1, 2, 3), the strength of the adjustment is determined depending on at least one distance of the point from a delimitation of the action region (24, 26) and/or depending on a time which has elapsed since the triggering of the corresponding restraining system (1, 2, 3) and/or depending on the motion values.

8. Method according to any of the preceding claims,
**characterised in**
**that** at least in the event of actions concerning the triggering of restraining systems (1, 2, 3) in parallel a direction algorithm (6, 7, 8) limited only to sensor data and restraining systems (1, 2, 3) assigned to one direction is carried out, wherein a trigger signal both based on the motion values and also based on the direction algorithm (6, 7, 8) is sufficient for triggering the restraining system (1, 2, 3).

9. Method according to claim 8,
**characterised in**
**that** actions related to the adjusting of at least one operating parameter are controlled exclusively on the basis of the motion values.

10. Method according to any of the preceding claims,
**characterised in**
**that** as operating parameter an operating parameter is adjusted which concerns the harshness of the restraining intervention of the restraining system (1, 2, 3).

11. Motor vehicle (33) having a safety system (39) having a control device (38) designed to carry out a method according to any of the preceding claims.

## Revendications

1. Procédé pour faire fonctionner un système de sécurité (39) d'un véhicule automobile (33) en cas de collision avec un objet de collision, dans lequel des données de capteur décrivant l'accélération du véhicule automobile (33) dans différentes directions (34, 36) situées dans le plan horizontal sont enregistrées par plusieurs capteurs de collision (35, 37) du véhicule automobile (33) et sont évaluées par rapport au déclenchement et/ou à une adaptation d'un paramètre de fonctionnement en tant qu'actions de systèmes de retenue (1, 2, 3) pour des occupants du véhicule automobile (33), dans lequel des systèmes de retenue (1, 2, 3) se rapportant à la direction longitudinale et à la direction transversale sont utilisés, dans lequel deux valeurs de mouvement décrivant le mouvement d'au moins un occupant du véhicule automobile (33) le long d'au moins une direction longitudinale (34) et d'au moins une direction transversale (36) du véhicule automobile (33), qui couvrent un espace de décision bidimensionnel, sont déterminées à partir des données de capteur, dans lequel des zones d'action (13, 14, 24, 26) associées aux actions sont définies dans l'espace de décision et une action est effectuée lorsque le point décrit par les valeurs de mouvement et actualisé en permanence pendant la collision se situe dans l'espace de décision à l'intérieur de la zone d'action (13, 14, 24, 26) associée à l'action.

2. Procédé selon la revendication 1,
**caractérisé en ce**
**qu'**une double intégration des données de capteur décrivant l'accélération dans la direction longitudinale (34) et la direction transversale (36) est effectuée pour la détermination des valeurs de mouvement.

3. Procédé selon la revendication 2,
**caractérisé en ce**
**qu'**une fenêtre de temps pour l'intégration est sélectionnée dans la plage de 10 à 100 ms et/ou en fonction d'un état de fonctionnement actuel d'au moins un des systèmes de retenue (1, 2, 3).

4. Procédé selon l'une quelconque des revendications précédentes,
**caractérisé en ce**
**qu'**au moins un filtre et/ou facteur décrivant l'effet d'objets limitant et/ou modifiant le trajet de mouvement d'occupants et/ou leur position est utilisé pour la détermination des valeurs de mouvement.

5. Procédé selon la revendication 4,
**caractérisé en ce**
**que** des paramètres de filtre du filtre et/ou le facteur sont déterminés à partir des résultats de simulations et/ou mesures d'essai.

6. Procédé selon l'une quelconque des revendications précédentes,
**caractérisé en ce**
**qu'**une ligne de déclenchement (15, 16) limitant la zone d'action associée (13, 14) est utilisée pour une action décrivant un déclenchement d'un des systèmes de retenue (1, 2, 3), dans lequel le déclenchement du système de retenue (1, 2, 3) a lieu lors d'un dépassement de la ligne de déclenchement (15, 16) par le point défini par les valeurs de mouvement et actualisé en permanence pendant la collision.

7. Procédé selon l'une quelconque des revendications précédentes,
**caractérisé en ce**
**que** l'intensité de l'adaptation est déterminée en fonction d'au moins une distance du point par une limitation de la zone d'action (24, 26) et/ou par un temps écoulé depuis le déclenchement du système de retenue correspondant (1, 2, 3) et/ou par les valeurs de mouvement pour une action concernant une adaptation d'un paramètre de fonctionnement d'un des systèmes de retenue (1, 2, 3).

8. Procédé selon l'une quelconque des revendications précédentes,
**caractérisé en ce**
**qu'**un algorithme de direction (6, 7, 8) limité seulement à des systèmes de retenue (1, 2, 3) et à des données de capteur associés à une direction est effectué en parallèle au moins pour des actions concernant le déclenchement de systèmes de retenue (1, 2, 3), dans lequel un signal de déclenchement est suffisant aussi bien en raison des valeurs de mouvement qu'en raison de l'algorithme de direction (6, 7, 8) pour le déclenchement du système de retenue (1, 2, 3).

9. Procédé selon la revendication 8,
**caractérisé en ce**
**que** des actions se rapportant à l'adaptation d'au moins un paramètre de fonctionnement sont commandées exclusivement en raison des valeurs de mouvement.

10. Procédé selon l'une quelconque des revendications précédentes,
**caractérisé en ce**
**qu'**un paramètre de fonctionnement concernant la dureté de l'intervention de retenue du système de retenue (1, 2, 3) est adapté en tant que paramètre de fonctionnement.

11. Véhicule automobile (33), présentant un système de sécurité (39) avec un appareil de commande (38) réalisé pour la mise en oeuvre d'un procédé selon l'une quelconque des revendications précédentes.
